# EUROPEAN PATENT SPECIFICATION

(11) **EP 1 752 334 B1**
(45) Date of publication and mention of the grant of the patent: **19.03.2008**
(21) Application number: 06012922.8
(22) Date of filing: 23.06.2006
(51) Int. Cl.: B60N 2/48

(54) **Headrest insert**
Kopfstützeneinsatz
Insert d'un appui-tête

(30) Priority: 12.08.2005 US 707880 P; 21.04.2006 US 408317
(43) Date of publication of application: 14.02.2007
(73) Proprietor: Illinois Tool Works Inc., Glenview, IL 60026-1215 (US)
(72) Inventor: Andrews, Steven R., Orland Park Illinois 60467 (US)
(74) Representative: Zech, Stefan Markus

(56) References cited:
- EP-A- 1 097 837
- DE-U1- 9 400 352
- US-A- 5 660 441

## Description

### FIELD OF THE INVENTION

The present invention relates to automobile headrests, and, more particularly, the invention pertains to headrest inserts for headrest assemblies commonly found in automobiles.

EP 1 097 837 A2 discloses a headrest insert having a corrugated, bent or similar irregular center portion.

### BACKGROUND OF THE INVENTION

Seats in automobiles and other vehicles are designed to protect the occupant from injury during accidents and other occurrences. As part of the seat design, it is known to extend portions of the seat back to a height that provides support behind the head and neck of the seat occupant. Posterior support of the head and neck can reduce whiplash and other injuries that are common in moving accidents, and even it stationary accidents occurring with only minimal violence. While some seat backs are of a continuous form from the seat bottom to an elevation at or above an occupants head, it is also known to provide the headrest as a vertically adjustable and removable attachment to the seat back.

In a known design for automobile seats, the seat back has two sleeves having openings at the top of the seat back. A headrest includes corresponding rods, tubes or other elongated bodies that can be inserted into the sleeves. By providing two sleeves in the seat back and two appropriate rods at opposite ends of the headrest, sound structural support is provided. It is known to provide the headrest as a generally curved body from one end thereof to the opposite end thereof so that the posterior head of the occupant is comfortably received against the headrest.

The headrest includes a substructure between the elongated rods generally forming the curved shape of the headrest. Padding and an outer covering are provided over the substructure. However, the substructure must provide sufficient rigidity and support between the opposed elongated rods so that the occupants head is adequately supported even in a violent crash.

Difficulties can be encountered with known headrest subassemblies or inserts. For adequate support, the elongated rods of the headrest extend a significant distance into the seat back. The space between the rods is relatively short, the rods are narrow and the sleeves are only sufficiently wide to receive the rods. Accordingly, with the rods relatively long and interconnected at only one end, relative skewing of one rod compared to the other can occur, Skewing or racking can make it difficult to operate or adjust the headrest relative to the seat body. The relatively rigid headrest inserts have not accommodated skewing of the support rods, one relative to the other.

Further, the sleeves in the seat backs are rigidly secured between frame members of the seat. Again, since the headrest support rods are relatively long and narrow, any slight misalignment or inaccurate positioning of the sleeves relative to each other can result in binding against the support rods, and difficult operation if the sleeves are not perfectly parallel and properly aligned axially with the openings at the top of the seat back. Even a slight variation in parallelism between the two sleeves coupled with a very slight deviation from parallelism between the headrest support rods can result in difficult operation of the headrest.

United States Patent 6,224,158 and United States Patent 6,789,850 disclose headrest inserts having transitions at the centers thereof.

There is a need in the industry for a more easily operated headrest and one that more readily accommodates normal day-to-day uses and common conditions for headrests.

### SUMMARY OF THE INVENTION

The present invention provides a headrest insert that accommodates skewing or misalignment of the headrest support rods relative to sleeves in the seat back.

In one aspect thereof, the present invention provides a headrest insert for an automobiles headrest, with first and second rod holders and a web connected to and spanning the area between the first and second rod holders. The web has a top edge and a bottom edge. A flex portion in the web accommodates relative angular movement between the first rod holder and the second rod holder.

In another aspect thereof, the present invention provides a headrest insert with first and second rod holder adapted for engaging a support rod inserted therein. A web interconnects the first and second rod holders. At least one corrugated portion in the web has a series of ridges and valleys extending from a top edge of the web to a bottom edge of the web.

In a still further aspect thereof, the present invention provides a headrest insert with first and second rod receivers adapted for engaging support rods inserted therein and a web interconnecting the first and second rod holders. The web has a top edge and a bottom edge. At least one region in the web has a compressible and extendable structure disposed from the top edge to the bottom edge, and enabling accordion-like movement of the first and second rod receivers.

An advantage of the present invention is providing a headrest insert that accommodates and compensates for minor skewing of headrest support rods.

Another advantage of the present invention is providing a headrest insert that facilitates smooth operation of a headrest, without undue effort by the occupant.

Still another advantage of the present invention is providing a headrest insert that adequately supports the structure in crash events.

Other features and advantages of the invention will become apparent to those skilled in the art upon review of the following detailed description, claims and drawings in which like numerals are used to designate like features.

### BRIEF DESCRIPTION OF THE DRAWINGS

Fig. 1 is a perspective view of a headrest insert in accordance with the present invention;
Fig. 2 is an elevational view of the headrest insert shown in Fig. 1, with support rods installed therein;
Fig. 3 is a top view of the headrest insert shown in Figs. 1 and 2;
Fig. 4 is an end elevational view of the headrest insert shown in the previous drawings; and
Fig. 5 is a perspective view of another embodiment of the present invention.

Before the embodiments of the invention are explained in detail, it is to be understood that the invention is not limited in its application to the details of construction and the arrangements of the components set forth in the following description or illustrated in the drawings. The invention is capable of other embodiments and of being practiced or being carried out in various ways. Also, it is understood that the phraseology and terminology used herein are for the purpose of description and should not be regarded as limiting. The use herein of "including", "comprising" and variations thereof is meant to encompass the items listed thereafter and equivalents thereof, as well as additional items and equivalents thereof.

### DETAILED DESCRIPTION OF THE PREFERRED EMBODIMENT

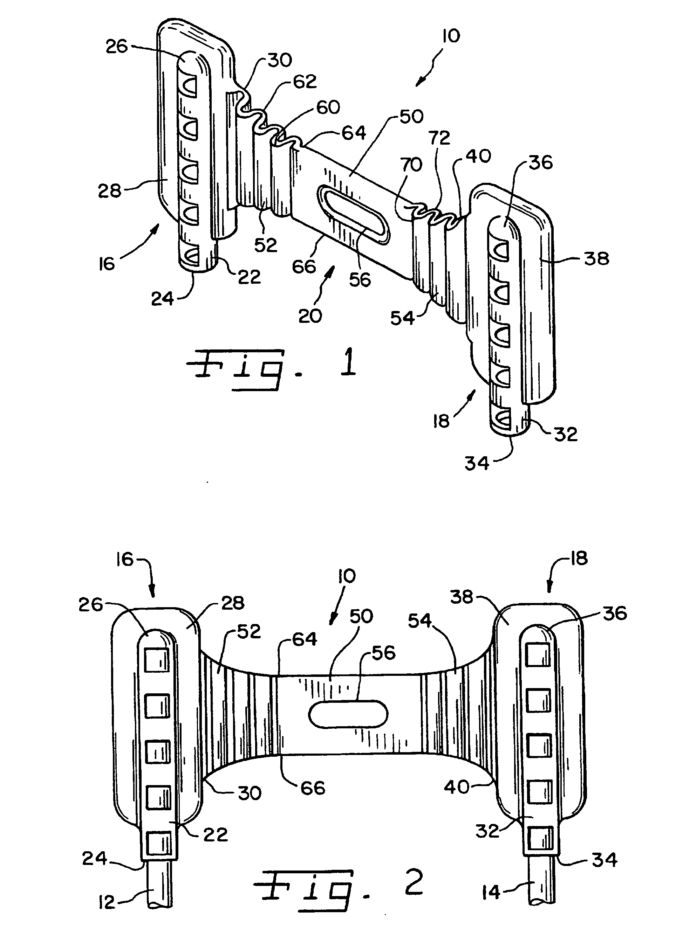

Referring now more specifically to the drawings and to Fig. 1 in particular, a headrest insert 10 in accordance with the present invention is shown. Insert 10 is coupled with first and second support rods 12, 14 (Fig. 2) for attachment to a vehicle seat (not shown). The general shape and configuration of insert 10 is selected to enhance or complement the overall appearance and functionality of the vehicle seat (not shown) on which it is installed. Accordingly, the length, height and general shape can vary from one installation to another installation.

Headrest insert 10 includes first and second rod holders 16, 18 for attachment to support rods 12 and 14, and a band or web 20 joined to and extending between rod holders 16, 18. Insert 10 can be molded from suitable plastics such as polypropylene; however, other materials also can be used. In the exemplary embodiment shown, insert 10 is molded as a single monolithic body including rod holders 16, 18 and band or web 20.

Rod holder 16 includes a cylindrical rod receiver 22 open at one end 24 at the bottom of insert 10 and closed at a top end 26. Support rod 12 is inserted into rod receiver 22 through open end 24 and extends through rod receiver 22 to and against closed top and 26. Rod receiver 22 defines an internal diameter selected with an outer dimension of support rod 12 such that the support rod is received in rod receiver 22 with a strong interference fit so that relative movement of the support rod and insert 10 is inhibited. Alternatively, bonding with adhesive, welding or other joining techniques can be used to secure the support rod in rod receiver 22. Rod holder 16 includes a flange 28 extending along the length of rod receiver 22 on opposite sides thereof and across the top of rod receiver 22 at top end 26. Band 20 merges with flange 28 along a margin 30.

Rod holder 18 is structured similarly to rod holder 16 and includes a rod receiver 32 having an open end 34 and a closed top end 36 all similar to the corresponding structures in rod holder 16. Further, rod holder 18 includes a flange 38 similar to flange 28 which joins with web 20 at a margin 40. Support rod 14 is inserted into rod receiver 32 through open end 34 and extends through rod receiver 32 to and against closed top and 36. Rod receiver 32 defines an internal diameter selected with an outer dimension of rod 14 such that the rod is received in rod receiver 22 with a strong interference fit so that relative movement of the rod 14 and insert 10 is inhibited. Alternatively, bonding with adhesive, welding or other joining techniques can be used to secure support rod 14 in rod receiver 32.

Web 20 is a generally elongated body including a center plate 50 and flex portions 52, 54 at opposite ends of center plate 50, between plate 50 and rod holders 16, 18 respectively. Center plate 50 defines an opening 56 therethrough. Opening 56 in the exemplary embodiment is an elongated opening oriented generally in a horizontal direction; however, other shapes and orientations also can be used. Opening 56 enhances twisting or other movement or slight deformation or distortion of center plate 50 out of its true and unaltered configuration. Accordingly, two or more smaller openings can be used. It is also contemplated that in some embodiments of the present invention an opening or openings 56 in the center of band 20 are not required.

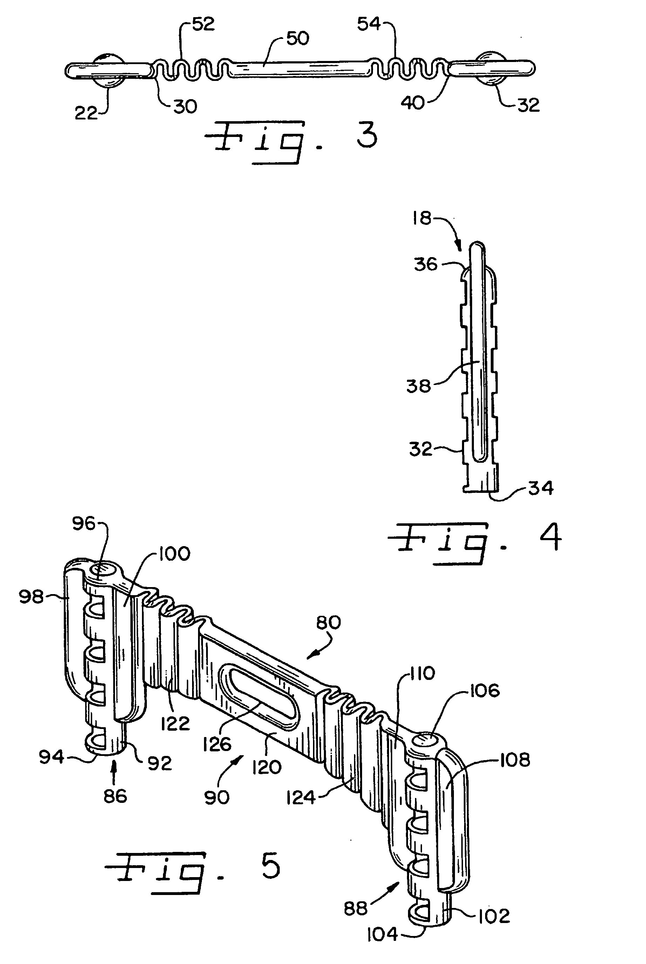

Flex portion 52, as perhaps best seen in Figs. 1 and 3, is a corrugated body, which, when viewed from the front illustrated in Fig. 1, has adjoining ridges 60 and valleys 62 extending from a top edge 64 of web 20 to a bottom edge 66 of web 20. As readily understood by those skilled in the art, when viewed from the opposite side from the side shown in Fig. 1, the valleys and ridges are reversed. The corrugated or serpentine structure of flex portion 52 inherently allows relative side-to-side and front-to-back twisting of rod holder 16 relative to center band 20. Flex portion 52 allows slight accordion like movement of rod holder 16 connected thereto, facilitating movement of open end 24 and top end 26 in substantially opposite directions.

Flex portion 54, also perhaps best seen in Figs. 1 and 3, is a corrugated body similar to flex portion 52. Accordingly, when viewed from the front illustrated in Fig. 1, flex portion 54 has adjoining ridges 70 and valleys 72 extending from top edge 64 of web 20 to bottom edge 66 of web 20. As readily understood by those skilled in the art, when viewed from the opposite side from the side shown in Fig. 1, the valleys and ridges are reversed. The corrugated or serpentine structure of flex portion 54 inherently allows relative side-to-side and front-to-back twisting of rod holder 18 relative to center band 20. Flex portion 54 allows slight accordion like movement of rod holder 18 connected thereto, facilitating movement of open end 34 and top end 36 in substantially opposite directions.

Flex portions 52, 54 and opening 56 accommodate twisting of rod holders 16 and 18 relative to one another and to band or web 20 side-to-side, front-to-back and at angular relationships relative to each other and to center band or web 20. Accordingly, as rods 12, 14 are inserted in rod receivers in a seat (not shown) the necessary angular movement of one with respect to the other is accommodated by band or web 20. Rods 12 and 14 can adjust as necessary to slide smoothly and easily into and out of the seat back as adjustment occurs. However, in spite of any relative twisting that may occur, band 20 remains structurally sound and provides adequate support within a headrest for an occupant of a seat on which the headrest is used. Flex portions 52, 54 have a height similar to the height of plate 50, adding to the overall soundness of insert 10 while enabling necessary distortion to facilitate adjusting the headrest in which the insert is used. In the exemplary embodiment shown in the drawings, flex portions 52, 54 are of increasing height relative to center plate 50 nearer rod holders 16, 18. The overall rigidity or flexibility of a flex portions 52, 54 can be selected as desired by controlling the choice of materials for insert 10, the thickness of material in flex portions 52, 54 and the size of corrugations formed therein, including the frequency and amplitude of such corrugations.

Fig. 5 illustrates a second embodiment of the present invention in which headrest insert 80 includes rod holders 86, 88 on opposite ends of a band or web 90. Rod holder 86 includes a cylindrical rod receiver 92 having an open end 94 and an opened, but narrowed top end 96. Opposed flange portions 98, 100 are provided on opposite sides of rod receiver 92. Rod holder 88 is structured similarly to the structure of rod holder 86, having a rod receiver 102 with opposed ends 104, 106 and flange portions 108 and 110. Band or web 80 includes a center plate 120 with corrugated flex portions 122, 124 on opposite ends thereof. An opening 126 is provided in center plate 120. Accordingly, center plate 120 and flex portions 122, 124 are substantially similar to center plate 50 and flex portions 52, 54 described previously herein.

Headrest insert 80 accommodates twisting and skewing as required, but may have manufacturing advantages for molding when compared with the embodiment shown as headrest insert 10.

With support rods 12, 14 installed therein, rod holders 16, 18 of headrest insert 10 and rod holders 86, 88 of headrest insert 80 are substantially rigid along the lengths thereof, from the open bottom ends thereof to the top ends thereof. If the lower distal ends of support rods 12, 14 are adjusted from their natural, nondeflected installed positions to align with holding structure or sleeves in a seat (not shown), the top ends and bottom ends of the rod holders are moved in substantially opposite directions. Flex portions 52, 54, 122, 124 are simultaneously compressible and extendable in different areas thereof, thereby distributing stresses caused by the distortion of inserts 10 or 80 and enabling accordion like movement whereby the top ends and bottom ends of the rod holders can move in substantially opposite directions to facilitate movement of support rods 12, 14 in the sleeves (not shown) in which the rods are held. With the improved flexibility afforded by flex portions 52, 54, 122, 124, inserts 10, 80 and webs 20, 90 thereof can be made of a thicker material or stronger material for improved strength and performance of a headrest in which the insert is used.

Variations and modifications of the foregoing are within the scope of the present invention. It is understood that the invention disclosed and defined herein extends to all alternative combinations of two or more of the individual features mentioned or evident from the text and/or drawings. All of these different combinations constitute various alternative aspects of the present invention. The embodiments described herein explain the best modes known for practicing the invention and will enable others skilled in the art to utilize the invention. The claims are to be construed to include alternative embodiments to the extent permitted by the prior art.

Various features of the invention are set forth in the following claims.

## Claims

1. A headrest insert (10; 80) for an automobiles headrest, comprising:
first (16; 86) and second (18; 88) rod holders;
a web (20; 90) connected to and spanning the area between said first (16; 86) and second (18; 88) rod holders, said web (20; 90) having a top edge (64) and a bottom edge (66);
at least one flex portion (52, 54; 122, 124) in said web (20; 90) extending from said top edge (64) of said web (20; 90) to said bottom edge (66) of said web (20; 90) for accommodating relative angular movement between said first rod holder (16; 86) and said second rod holder (18; 88);
**characterized by** said web (20; 90) including a center plate (50; 120) and first (52; 122) and second (54; 124) flex portions between said center plate (50; 120) and said first (16; 86) and second (18; 88) rod holders, respectively.

2. The headrest insert (10; 80) of claim 1, said first (52; 122) and second (54; 124) flex portions comprising corrugating structure having ridges (60; 70) and valleys (62; 72) extending between said top edge (64) of said web (20; 90) and said bottom edge (66) of said web (20; 90).

3. The headrest insert (10; 80) of claim 1 or 2, said center plate (50; 120) having at least one opening (56; 126) therethrough.

4. The headrest insert (10; 80) of claim 1, said flex portions (52, 54; 122, 124) comprising a corrugated body having ridges (60; 70) and valleys (62; 72) extending from said top edge (64) of said web (20; 80) to said bottom edge (66) of said web (20; 90).

5. The headrest insert (10; 80) of claim 4, including two said corrugated portions (52, 54; 122, 124), one said corrugated portion (52; 122) adjacent said first rod holder (16; 86) and the other of said corrugated portions (54; 124) adjacent said second rod holder (18; 88).

6. The headrest insert (10; 80) of claim 1 or 5, each said rod holder (16, 18; 86, 88) including a cylindrical rod receiver (22, 32; 92, 102) and a flange (28, 38; 108, 110) adjacent said receiver (22, 32; 92, 102).

7. The headrest insert (10; 80) of claim 6, each said rod holder (16, 18; 86, 88) including first (28; 108) and second (38; 110) flanges on opposite sides thereof.

8. The headrest insert (10; 80) of claim 1, comprising a monolithic body.

9. A headrest insert (10; 80) comprising:
first (22; 92) and second (32; 102) rod receivers adapted for engaging a support rod (12, 14) inserted therein;
a web (20; 90) interconnecting said first (16; 86) and second (18; 88) rod holders; and at least one corrugated portion (52, 54; 122, 124) in said web (20; 90) having a series of ridges (60; 70) and valleys (62; 72) extending from a top edge (64) of said web to a bottom edge (66) of said web (20; 90);
**characterized by**
said headrest insert (10; 80) having first (52; 122) and second (54; 124) corrugated portions adjacent said first (16; 86) and second (18; 88) rod holders respectively, and a non-corrugated plate-like portion (50; 120) between said first (52; 122) and second (54; 124) corrugated portions.

10. The headrest insert (10; 80) of claim 9, comprising a monolithic body.

11. The headrest insert (10; 80) of claim 9, said plate-like portion (50; 120) having at least one opening (56; 126) therethrough.

12. The headrest insert (10; 80) of claim 11, said opening (56; 126) being elongated in the general direction between said first (52; 122) and second (54; 124) corrugated portions.

13. A headrest insert (10; 80) comprising:
first (22; 92) and second (32; 102) rod receivers adapted for engaging support rods (12, 14) inserted therein;
a web (20; 90) interconnecting said first (16; 86) and second (18; 88) rod holders, said web (20; 90) having a top edge (64) and a bottom edge (66), and at least one region in said web (20; 90) having a compressible and
extendable structure disposed from said top edge (64) to said bottom edge (66), said structure enabling accordion-like movement of said first (22; 92) and second (32; 102) rod receivers;
**characterized in that**
two regions of said web (20; 90) have compressible and extendable structure enabling accordion-like movement of said first (22; 92) and second (32; 102) rod receivers.

14. A headrest insert (10; 80) comprising:
first (22; 92) and second (32; 102) rod receivers adapted for engaging support rods (12, 14) inserted therein;
a web (20; 90) interconnecting said first (16; 86) and second (18; 88) rod holders, said web (20; 90) having a top edge (64) and a bottom edge (66), and at least one region in said web (20; 90) having a compressible and
extendable structure disposed from said top edge (64) to said bottom edge (66), said structure enabling accordion-like movement of said first (22; 92) and second (32; 102) rod receivers;
**characterized by**
said web (20; 90) including a center distortable region (50; 120) and regions of said web (20; 90) on opposite sides of said center distortable region (50; 120) having compressible and extendable structure enabling accordion-like movement of said first (22; 92) and second (32; 102) rod receivers.

## Patentansprüche

1. Kopfstützeneinsatz (10; 80) für eine Automobilkopfstütze, der Folgendes umfasst:
einen ersten (16; 86) und einen zweiten (18; 88) Stangenhalter;
einen Steg (20; 90), der mit dem ersten (16; 86) und dem zweiten (18; 88) Stangenhalter verbunden ist und den Bereich zwischen ihnen überspannt, wobei der Steg (20; 90) einen oberen Rand (64) und einen unteren Rand (66) aufweist;
mindestens einen flexiblen Teil (52, 54; 122, 124) im Steg (20; 90), der sich von dem oberen Rand (64) des Stegs (20; 90) zum unteren Rand (66) des Stegs (20; 90) zur Aufnahme einer relativen Winkelbewegung des ersten Stangenhalters (16; 86) und des zweiten Stangenhalters (18; 88) erstreckt; **dadurch gekennzeichnet, dass** der Steg (20; 90) eine Mittelplatte (50; 120) und einen ersten (52; 122) und einen zweiten (54; 124) flexiblen Teil zwischen der Mittelplatte (50; 120) und dem ersten (16; 86) bzw. dem zweiten (18; 88) Stangenhalter enthält.

2. Kopfstützeneinsatz (10; 80) nach Anspruch 1, wobei der erste (52; 122) und der zweite (54; 124) flexible Teil eine gewellte Struktur mit Rippen (60; 70) und Tälern (62; 72) umfasst, die sich zwischen dem oberen Rand (64) des Stegs (20; 90) und dem unteren Rand (66) des Stegs (20; 90) erstrecken.

3. Kopfstützeneinsatz (10; 80) nach Anspruch 1 oder 2, wobei die Mittelplatte (50; 120) mindestens eine Öffnung (56; 126) **dadurch** aufweist.

4. Kopfstützeneinsatz (10; 80) nach Anspruch 1, wobei die flexiblen Teile (52, 54; 122, 124) einen gewellten Körper mit Rippen (60; 70) und Tälern (62; 72) aufweist, die sich vom oberen Rand (64) des Stegs (20; 90) zum unteren Rand (66) des Stegs (20; 90) erstrecken.

5. Kopfstützeneinsatz (10; 80) nach Anspruch 4, der zwei gewellte Teile (52, 54; 122, 124) enthält, einen solch gewellten Teil (52; 122) neben dem ersten Stangenhalter (16; 86) und den anderen solch gewellten Teil (54; 124) neben dem zweiten Stangenhalter (18; 88).

6. Kopfstützeneinsatz (10; 80) nach Anspruch 1 oder -5, wobei jeder Stangenhalter (16, 18; 86, 88) eine zylindrische Stangenaufnahme (22, 32; 92, 102) und einen Flansch (28, 38; 108, 110) neben der Aufnahme (22, 32; 92, 102) enthält.

7. Kopfstützeneinsatz (10; 80) nach Anspruch 6, wobei jeder Stangenhalter (16, 18; 86, 88) einen ersten (28; 108) und einen zweiten (38; 110) Flansch auf einander gegenüberliegenden Seiten davon enthält.

8. Kopfstützeneinsatz (10; 80) nach Anspruch 1, der einen einstückigen Körper umfasst.

9. Kopfstützeneinsatz (10; 80), der Folgendes umfasst: . eine erste (22; 92) und eine zweite (32; 102) Stangenaufnahme, die zum Eingriff einer darin eingeführten Stützstange (12, 14) ausgeführt sind; einen Steg (20; 90), der den ersten (16; 86) und den zweiten (18; 88) Stangenhalter miteinander verbindet; und mindestens einen gewellten Teil (52, 54; 122, 124) in dem Steg (20; 90) mit einer Reihe von Rippen (60; 70) und Tälern (62; 72), die sich von einem oberen Rand (64) des Stegs zu einem unteren Rand (66) des Stegs (20; 90) erstrecken;
**dadurch gekennzeichnet, dass**
der Kopfstützeneinsatz (10; 80) einen ersten (52.; 122) und einen zweiten (54; 124) gewellten Teil neben dem ersten (16; 86) bzw. dem zweiten (18; 88) Stangenhalter und einen nicht gewellten plattenförmigen Teil (50; 120) zwischen dem ersten (52; 122) und dem zweiten (54; 124) gewellten Teil aufweist.

10. Kopfstützeneinsatz (10; 80) nach Anspruch 9, der einen einstückigen Körper umfasst.

11. Kopfstützeneinsatz (10; 80) nach Anspruch 9, wobei der plattenförmige Teil (50; 120) mindestens eine Öffnung (56; 126) **dadurch** aufweist.

12. Kopfstützeneinsatz (10; 80) nach Anspruch 11, wobei die Öffnung (56; 126) in der allgemeinen Richtung zwischen dem ersten (52; 122) und dem zweiten (54; 124) gewellten Teil langgestreckt ist.

13. Kopfstützeneinsatz (10; 80), der Folgendes umfasst:
eine erste (22; 92) und eine zweite (32; 102) Stangenaufnahme, die zum Eingriff einer darin eingeführten Stützstange (12, 14) ausgeführt sind; einen Steg (20; 90), der den ersten (16; 86) und den zweiten (18; 88) Stangenhalter miteinander verbindet, wobei der Steg (20; 90) einen oberen Rand (64) und einen unteren Rand (66) aufweist,
und mindestens einen Bereich in dem Steg (20; 90) mit einer zusammendrückbaren und ausdehnbaren Struktur, die vom oberen Rand (64) zum unteren Rand (66) angeordnet ist, wobei die Struktur eine ziehharmonikaartige Bewegung der ersten (22; 92) und der zweiten (32; 102) Stangenaufnahme ermöglicht;
**dadurch gekennzeichnet, dass**
zwei Bereiche des Stegs (20; 90) eine zusammendrückbare und ausdehnbare Struktur aufweisen, die eine ziehharmonikaartige Bewegung der ersten (22; 92) und der zweiten (32; 102) Stangenaufnahme ermöglicht.

14. Kopfstützeneinsatz (10; 80), der Folgendes umfasst :
eine erste (22; 92) und eine zweite (32; 102) Stangenaufnahme, die zum Eingriff von darin eingeführte Stützstangen (12, 14) ausgeführt sind; einen Steg (20; 90), der den ersten (16; 86) und den zweiten (18; 88) Stangenhalter miteinander verbindet, wobei der Steg (20; 90) einen oberen Rand (64) und einen unteren Rand (66) aufweist,
und mindestens einen Bereich in dem Steg (20; 90) mit einer zusammendrückbaren und ausdehnbaren Struktur, die vom oberen Rand (64) zum unteren Rand (66) angeordnet ist, wobei die Struktur eine ziehharmonikaartige Bewegung der ersten (22; 92) und der zweiten (32; 102) Stangenaufnahme ermöglicht;
**dadurch gekennzeichnet, dass**
der Steg (20; 90) einen mittleren verformbaren Bereich (50; 120) aufweist und Bereiche des Stegs (20; 90) auf einander gegenüberliegenden Seiten des mittleren verformbaren Bereichs (50; 120) eine zusammendrückbare und ausdehnbare Struktur aufweisen, die eine ziehharmonikaartige Bewegung der ersten (22; 92) und der zweiten (32; 102) Stangenaufnahme ermöglicht.

## Revendications

1. Insert d'appui-tête (10; 80) pour un appui-tête d'automobiles, comprenant :
un premier (16 ; 86) et un deuxième (18 ; 88) supports de tige ;
une âme (20 ; 90) reliée à et s'étendant à travers la région située entre lesdits premier (16 ; 86) et deuxième (18, 88) supports de tige, ladite âme (20 ; 90) comportant un bord supérieur (64) et un bord inférieur (66) ;
au moins une partie flexible (52, 54 ; 122, 124) dans ladite âme (20 ; 90) s'étendant dudit bord supérieur (64) de ladite âme (20 ; 90) audit bord inférieur (66) de ladite âme (20 ; 90) pour compenser le mouvement angulaire relatif entre ledit premier support de tige (16 ; 86) et ledit deuxième support de tige (18 ; 88) ;
**caractérisé en ce que** ladite âme (20 ; 90) comprend une plaque centrale (50 ; 120) et une première (52 ; 122) et une deuxième (54, 124) parties flexibles entre ladite plaque centrale (50 ; 120) et lesdits premier (16 ; 86) et deuxième (18; 88) supports de tige, respectivement.

2. Insert d'appui-tête (10 ; 80) selon la revendication 1 lesdites première (52 ; 122) et deuxième (54 ; 124) parties flexibles comprenant une structure ondulée comportant des sommets (60 ; 70) et des creux (62 ; 72) qui s'étend entre ledit bord supérieur (64) de ladite âme (20 ; 90) et ledit bord inférieur (66) de ladite âme (20 ; 90).

3. Insert d'appui-tête (10 ; 80) selon la revendication 1 ou 2 ladite plaque centrale (50 ; 120) comportant au moins une ouverture (56 ; 126) pratiquée à travers elle.

4. Insert d'appui-tête (10 ; 80) selon la revendication 1, lesdites parties flexibles (52, 54 ; 122, 124) comprenant un corps ondulé comportant des sommets (60 ; 70) et des creux (62; 72) qui s'étend dudit bord supérieur (64) de ladite âme (20 ; 90) audit bord inférieur (66) de ladite âme (20 ; 90).

5. Insert d'appui-tête (10 ; 80) selon la revendication 4, comprenant deux dites parties ondulées (52, 54 ; 122, 124), une dite partie ondulée (52 ; 122) adjacente audit premier support de tige (16 ; 86) et l'autre dite partie ondulée (54 ; 124) adjacente audit deuxième support de tige (18 ; 88).

6. Insert d'appui-tête (10 ; 80) selon la revendication 1 ou 5, chacun desdits supports de tige (16, 18 ; 86, 88) incorporant un récepteur de tige cylindrique (22, 32 ; 92, 102) et une bride (28, 38 ; 108, 110) adjacente audit récepteur (22, 32 ; 92, 102).

7. Insert d'appui-tête (10 ; 80) selon la revendication 6, chacun desdits supports de tige (16, 18 ; 86, 88) incorporant une première (28, 108) et une deuxième (38, 110) brides sur leurs côtés opposés.

8. Insert d'appui-tête (10 ; 80) selon la revendication 1, comprenant un corps monolithique.

9. Insert d'appui-tête (10 ; 80) comprenant :
un premier (22, 92) et un deuxième (32, 102) récepteurs de tige adaptés pour accueillir une tige de support (12, 14) insérée en eux ;
une âme (20 ; 90) reliant l'un à l'autre lesdits premier (16 ; 86) et deuxième (18 ; 88) supports de tige et au moins une partie ondulée (52, 54 ; 122, 124) dans ladite âme (20 ; 90) comporte une série de sommets (60 ; 70) et de creux (62 ; 72) et s'étend d'un bord supérieur (64) de ladite âme à un bord inférieur (66) de ladite âme (20 ; 90) ;
**caractérisé en ce que**
ledit insert d'appui-tête (10 ; 80) comprend la première (52 ; 122) et la deuxième (54 ; 124) parties ondulées adjacentes auxdits premier (16 ; 86) et. deuxième (18 ; 88) supports de tige respectivement, et une partie non ondulée semblable à une plaque (50 ; 120) entre lesdites première (52 ; 122) et deuxième (54 ; 124) parties ondulées.

10. Insert d'appui-tête (10 ; 80) selon la revendication 9, comprenant un corps monolithique.

11. Insert d'appui-tête (10; 80) selon la revendication 9, ladite partie semblable à une plaque (50 ; 120) comportant au moins une ouverture (56 ; 126) pratiquée à travers elle.

12. Insert d'appui-tête (10 ; 80) selon la revendication 11, ladite ouverture (56 ; 126) étant allongée dans la direction générale entre lesdites première (52 ; 122) et deuxième (54 ; 124) parties ondulées.

13. Insert d'appui-tête (10 ; 80) comprenant :
un premier (22, 92) et un deuxième (32, 102) récepteurs de tiges adaptés pour accueillir les tiges de support (12, 14) insérées en eux ;
une âme (20; 90) reliant l'un à l'autre lesdits premier (16 ; 86) et deuxième (18; 88) supports de tige, ladite âme (20 ; 90) comportant un bord supérieur (64) et un bord inférieur (66), et au moins une région de ladite âme (20 ; 90) comprenant une structure compressible et expansible disposée dudit bord supérieur (64) audit bord inférieur (66), ladite structure permettant un mouvement en accordéon desdits premier (22, 92) et deuxième (32, 102) récepteurs de tiges ;
**caractérisé en ce que**
deux régions de ladite âme (20 ; 90) comprennent une structure compressible et expansible permettant un mouvement en accordéon desdits premier (22, 92) et deuxième (32, 102) récepteurs de tiges.

14. Insert d'appui-tête (10 ; 80) comprenant :
un premier (22, 92) et un deuxième (32, 102) récepteurs de tiges adaptés pour accueillir les tiges de support (12, 14) insérées en eux ;
une âme (20 ; 90) reliant l'un à l'autre lesdits premier (16 ; 86) et deuxième (18 ; 88) supports de tige, ladite âme (20 ; 90), comportant un bord supérieur (64) et un bord inférieur (66), et au moins une région de ladite âme (20 ; 90) comprenant une structure compressible et expansible disposée dudit bord supérieur (64) audit bord inférieur (66), ladite structure permettant un mouvement en accordéon desdits premier (22, 92) et deuxième (32, 102) récepteurs de tiges ;
**caractérisé en ce que**
ladite âme (20 ; 90) incorpore une région centrale déformable (50 ; 120) et les régions de ladite âme (20 ; 90) situées sur les côtés opposés de ladite région centrale déformable (50 ; 120) comportent une structure compressible et expansible permettant un mouvement en accordéon desdits premier (22, 92) et deuxième (32, 102) récepteurs de tiges.
